# EUROPEAN PATENT SPECIFICATION

(11) **EP 0 579 190 B1**
(45) Date of publication and mention of the grant of the patent: **29.09.1999**
(21) Application number: 93111244.5
(22) Date of filing: 13.07.1993
(51) Int. Cl.: H04N 3/27, H04N 3/223

(54) **Television with commutation of the image format from 16/9 to 4/3**
Fernseher mit Umschaltung des Bildformats von 16/9 zu 4/3
Télévision avec commutation du format de l'image de 16/9 à 4/3

(30) Priority: 13.07.1992 IT TO920593
(43) Date of publication of application: 19.01.1994
(73) Proprietor: EDICO S.r.l., I-00197 Roma (IT)
(72) Inventor: Parenti, Umberto, I-40122 Bologna (IT)

(56) References cited:
- EP-A- 0 206 407
- EP-A- 0 374 715
- EP-A- 0 444 781
- EP-A- 0 540 077
- FR-A- 2 586 332

## Description

The invention has as its subject a television, comprising an image display device, of a shape being substantially rectangular, having a ratio between the equal sides substantially of 16/9.

It is known that recently televisions have been commercialised equipped with a picture-tube having a screen image substantially rectangular, the sides of which are of the 16/9 ratio.

However, with such televisions, the problem exists of also displaying imagines the sides of which being of the conventional 4/3 ratio.

In fact the enormous quantity of existing programs, recorded on film or on magnetic tape, having such image ratio makes it inevitable, for a long time to come, the coexistence of programs being in one format and of the other.

An approach to the problem is represented by temporal compression of the video signal, that however requires digital elaborations of the signal being rather complex and expensive and however not being of general use.

It is known from FR-A-2586332 a video display apparatus comprising means for modifying the amplitude of the horizontal deflection, acting on the correction circuit of the east west distortion; in such apparatus, the D.C. bias voltage of a control transistor of the said correction circuit can be changed in order to change the horizontal amplitude of the display.

The aim of the present invention is that of realising a solution to the indicated problem being extremely simple and inexpensive; another aim of the present invention is that of indicating a solution able to be also implemented in chassis already existing, conceived for the 4/3 format.

In view of obtaining the described aims, the present invention has as its subject a television, having the characteristics described in the attached claim 1; preferred embodiment are described in the subclaims.

The invention will now be described in detail, with reference to the annexed figure, that represents an example, explanatory but non-limiting, of the realisation of the invention.

From this description other aims and advantages of the invention will also be clear.

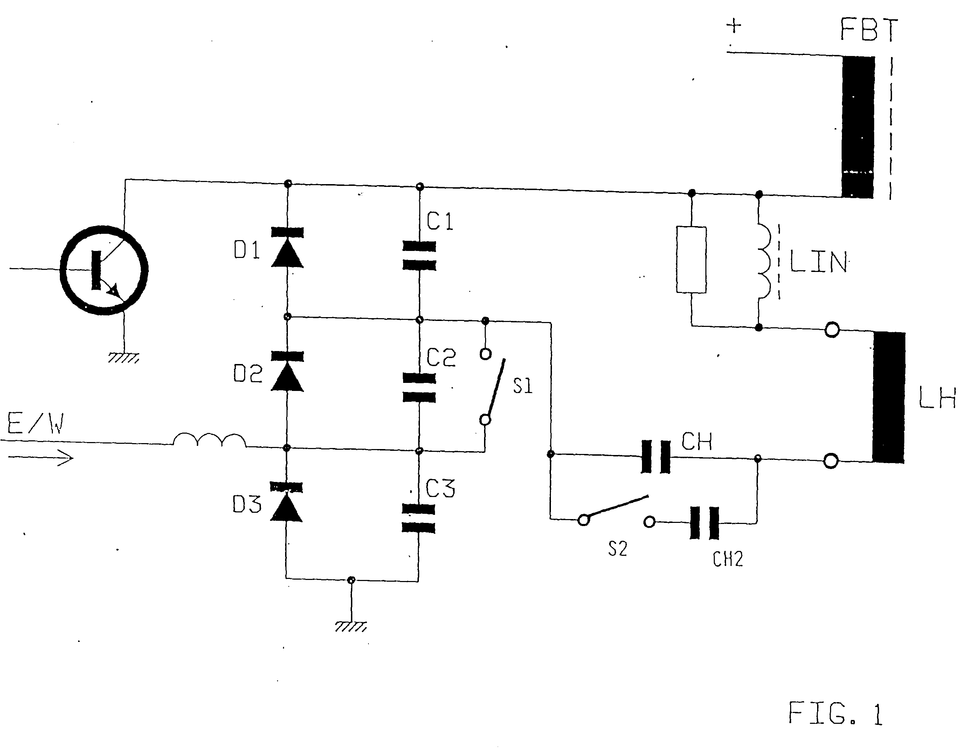

Figure 1 represents the electric diagram of the relevant part of the circuit of a television according to invention.

The conventional diode modulator that serves to compensate the distortion along the east/west axis, has been subdivided in three sections connected between them in series (D1,C1;D2,C2;D3,C3), injecting the correction signal east/west (E/W) to the ends of the lower cell, related to the earth.

Shortcircuiting the central cell (D2,C2) the circuital configuration becomes conventional (functioning with 16/9 format) and the nominal deflection current is obtained, with an opportune selection of values of the capacitors C1 and C3. Removing the shortcircuit (functioning with format 4/3), the central capacitor C2 is then to be found in series with C1 and C3 and the injection point of the correction signal east/west is deplaced, reducing the amplitude of the horizontal scansion to a ratio equal to approximately 1,33, defined by the values of the capacitors.

The minor deflection angle requires as a consequence to operate a minor S correction and is thus placed in parallel to the correction capacitor CH a further additional capacitor CH2, which is commuted in concomitance with the variation of the format; the commutation is obtained through the two switches S1 and S2.

For obtaining the maximum simplicity and the minimum cost, as a commutation element a simple two way relay is utilised, that also realises in a sure way the necessary isolations and it is easily interfaced with the format variation commands.

The circuit, tested on a conventional chassis developed for the 4/3 format, and implemented for functioning with 16/9 format picture-tubes, has demonstrated to perfectly carry out the required functions; the duration of the return impulse (flyback), the value of the extra high voltage (EHT) and the geometry of the image remain stable and comparable in both formats.

Naturally the reduction of the amplitude of the horizontal deflection, making the "raster" edges visible, requires a careful realisation of the deflection circuits for avoiding ringing, that would result in being particularly visible in the 4/3 format.

The characteristics of the television according to the invention result in being clear from the given description and annexed drawings.

As are also clear its advantages: constructive simplicity, reduced costs, functional reliability.

Certainly numerous variations are possible to the circuit described as an example, without departing from the novelty principles of the invention.

It is clear for example that all the described components can be replaced by normal technical equivalents (for example in place of the relay an electronic switch).

## Claims

1. Television set, comprising an image display device, of shape being substantially rectangular, having a first predetermined ratio between the sides, and comprising means for modifying the amplitude of the horizontal deflection, acting on the east-west distortion correction circuit, said distortion correction circuit comprising a diode modulator, characterised in that said diode modulator is subdivided in three sections connected in series (D1, C1, D2, C2, D3, C3), each section comprising a capacitor (C1, C2, C3) and a diode (D1, D2, D3) which is placed in parallel to said capacitor, and further characterised in that a switch (S1) is provided for shortcircuiting one (C2, D2) of said three sections so that in a position of said switch (S1) the amplitude of the horizontal deflection is reduced by approximately 1.33, for enabling said device, having a first aspect ratio of substantially 16:9, to display also images having a second aspect ratio substantially equal to 4:3.

2. Television set according to claim 1, characterised in that a second switch (S2) is provided, which connects an additional capacitor (CH2) in parallel to the normal S correction capacitor (CH), in the case of the 4:3 format.

3. Television set according to claim 2, characterised in that a two way relay is provided for controlling both said first (S1) and said second (S2) switch.

## Patentansprüche

1. Fernsehgerät mit einer im wesentlichen rechteckigen, ein erstes zwischen den Seiten vorbestimmtes Verhältnis, aufweisenden Bildanzeigeeinrichtung und mit auf den Ost-West-Verzerrungs-Korrekturschaltkreis wirkende Mittel zum Verändern der Amplitude der Horizontalablenkung, wobei der genannte Verzerrungs-Korrekturschaltkreis einen Diodenmodulator enthält,
dadurch gekennzeichnet, daß der genannte Diodenmodulator in drei in Reihe (D1, C1, D2, C2, D3, C3) angeschlossene Sektionen unterteilt ist, wobei jede Sektion einen Kondensator (C1, C2, C3) und eine mit dem genannten Kondensator parallelgeschaltete Diode aufweist und fernder dadurch gekennzeichnet ist, daß ein Schalter zum Kurzschließen einer (C2, D2) von den genannten drei Sektionen vorgesehen ist, damit in einer Position des Schalters (S1) die Amplitude der Horizontalablenkung um ungefähr 1,33 reduziert ist, um der genannten Einrichtung, die ein erstes Bildseitenverhältnis von im wesentlichen 16:9 aufweist, zu ermöglichen, auch Bilder mit einem zweiten Bildseitenverhältnis von im wesentlichen 4:3 darzustellen.

2. Fernsehgerät nach Anspruch 1,
dadurch gekennzeichnet, daß ein zweiter Schalter vorgesehen, welcher einen zusätzlichen Kondensator (CH2) neben dem normalen S Korrekturkondensator (CH) im Falle eines 4:3 Bildformats parallelschaltet.

3. Fernsehgerät nach Anspruch 2,
dadurch gekennzeichnet, daß ein Zweiwegrelais vorgesehen ist, um die beiden genannten ersten (S1) und zweiten (S2) Schalter zu steuern.

## Revendications

1. Poste de télévision comprenant un dispositif d'affichage de l'image, dont la forme est sensiblement rectangulaire et qui présente un premier rapport prédéterminé entre les côtés, et comprenant des moyens pour modifier l'amplitude de la déviation horizontale, agissant sur le circuit de correction de distorsion dans le sens est-ouest, ledit circuit de correction de distorsion comprenant un modulateur à diode caractérisé en ce que ledit modulateur à diode est subdivisé en trois sections raccordées en série (D1, C1, D2, C2, D3, C3), chaque section comprenant un condensateur (C1, C2, C3) et une diode (D1, D2, D3) qui est reliée en parallèle audit condensateur, et caractérisé en outre en ce qu'un commutateur (S1) est prévu pour court-circuiter l'une (C2, D2) desdites trois sections, de telle sorte que, dans une position dudit commutateur (S1) l'amplitude de la déviation horizontale soit réduite d'environ 1,33 pour permettre audit dispositif présentant un premier rapport d'aspect (dimensionnel des côtés de l'image) de sensiblement 16:9, d'afficher également des images présentant un deuxième rapport d'aspect (dimensionnel) sensiblement égal à 4:3.

2. Poste de télévision selon la revendication 1 caractérisé en ce qu'un deuxième commutateur (S2) est prévu qui relie un condensateur supplémentaire (CH2) en parallèle avec le condensateur normal (CH) de correction S, dans le cas du format 4:3.

3. Poste de télévision selon la revendication 2, caractérisé en ce qu'un relais à deux positions est prévu pour contrôler à la fois ledit premier (S1) ainsi que ledit deuxième commutateur (S2).
